(19) Europäisches Patentamt

European Patent Office

Office européen des brevets

(11) **EP 1 621 259 A1**

(12) **EUROPEAN PATENT APPLICATION**
published in accordance with Art. 158(3) EPC

(43) Date of publication:
**01.02.2006 Bulletin 2006/05**

(51) Int Cl.:
*B05D 3/00* (1974.07)    *B05C 11/00* (1968.09)
*G01J 3/46* (1968.09)

(21) Application number: **04728957.4**

(22) Date of filing: **22.04.2004**

(86) International application number:
**PCT/JP2004/005809**

(87) International publication number:
**WO 2004/096452 (11.11.2004 Gazette 2004/46)**

(84) Designated Contracting States:
**DE FR GB**

(30) Priority: **30.04.2003 JP 2003125466**

(71) Applicant: **Nippon Paint Co., Ltd.**
**Osaka-shi,**
**Osaka 531-8511 (JP)**

(72) Inventors:
• **NONOGAKI, Yoshihiro**
**4750019 (JP)**
• **ASABA, Takao**
**1460083 (JP)**

(74) Representative: **Rees, Alexander Ellison**
**Urquhart-Dykes & Lord LLP**
**30 Welbeck Street**
**London W1G 8ER (GB)**

(54) **COATING FILM UNEVENNESS PREDICTING METHOD, COATING FILM UNEVENNESS PREDICTING PROGRAM, COMPUTER-READABLE STORAGE MEDIUM, AND COATING FILM UNEVENNESS PREDICTING DEVICE**

(57) An object of the present invention is to provide a paint film mottling prediction method, a paint film mottling prediction program, a computer-readable storage medium, and a paint film mottling prediction apparatus in which a glitter representing value and color values acquired based on information of blended paints are substituted into a paint film mottling prediction formula.

A paint film mottling prediction method in which a glitter representing value and color values acquired based on information of blended paints are substituted into a paint film mottling prediction formula is disclosed. The method includes the steps of determining colors (S40), acquiring blending information (S41), acquiring the glitter representing value and color values (S42), and substituting into the correlation formula to obtain the mottling value (S43).

FIG.1

**Description**

TECHNICAL FIELD

The present invention generally relates to a paint film mottling prediction method, a paint film mottling prediction program, a computer readable storage medium, and a paint film mottling prediction apparatus.

BACKGROUND ART

It is practiced that colors are blended such that a color desired by a user is obtained. For example, a selection support method of automobile shell plate paint colors using a personal computer has been disclosed by the patent reference 1, where a color can be selected from predetermined sample colors that include solid system paint colors and metallic system paint colors in a state where the sample colors are applied to the shell plate, and the paint combination of the selected sample color can be easily determined. However, according to the selection support method of automobile shell plate paint color of the patent reference 1, there is a problem that the colors available for selection are defined beforehand.

In order to fill versatile needs of customers, an automatic color blending of paints for automobile repair has been disclosed by the patent reference 2. However, the invention disclosed by the patent reference 2 does not take into consideration paint performance and paint film performance of the blended paint. Therefore, there is a problem in that even if the blended color meets with customer satisfaction, the paint performance of the blended paint may be poor, or the paint film performance may be poor for practical use.

Then, the paint finish performance, paint film performance, and paint material performance of an actually blended paint are tested, and only successful paints are provided to the customers. However, user preference is highly diversified, and the number of colors required by users can be as great as the number of the users. For this reason, past data are often useless, and testing of each color is required, resulting in the need for a large amount of manpower and time.

Under situations as described above, it is highly desired that a calculation formula (prediction formula) be established such that performance of a blended paint is predicted, and only a successful blending is provided to the users.

In order to determine successful blending without performance problems, information about performance, such as the paint finish performance, the paint film performance, and the paint material performance, is quantified and evaluated based on past actual results, etc. Here, the paint finish performance is related to smoothness, gloss, mottling, sagging, pinholes, workability to a production line, etc; the paint film performance is related to durability (degree of degradation due to the sunlight), corrosion resistance (degree of degradation due to rust and water), adhesion, chipping nature, hardness, electric resistance, gloss, chemical resistance, etc.; and the paint material performance is related to storage durability, dilution stability, circulation-proof nature, etc.

In this manner, performance of a blended paint is predictable, and whether an acceptable quality of the paint is obtainable can be determined using the information described above, so that the problem about time and effort is solved.

However, in the case where a paint contains glittering color material (such as metal flakes and pearlescent mica), the color of the paint changes with viewing angle, and evaluation of the mottling is especially difficult.

In this connection, the patent reference 3 discloses "A paint mottling determination method of a metallic paint film", wherein by an irradiation process, a laser light having a beam diameter of 5-to-10 mm is irradiated to the surface of a target (to be measured) paint film of a metallic paint. The laser light is irradiated at a predetermined angle of incidence, and by a light-receiving process, the laser light reflected by the target paint film is received. The irradiation process and the light-receiving process are carried out at two or more contiguous spots that are apart from each other by a distance equal to or smaller than the laser beam diameter, and optical brightness of the reflected light that is received is calculated at two or more predetermined wavelengths, which process is repeated for all the spots. According to the optical brightness at the predetermined wavelengths of all the spots, the degree of paint mottling is determined.

Further, the patent reference 4 discloses "A mottling determination apparatus and an evaluation method of metallic paints" wherein a light is irradiated to a target paint surface, the brightness of the reflected light is continually measured, the reflected light being received at angles at which mirror reflection light is not received (i.e., the specularly reflected light being excepted), and a degree of mottling of the surface of the target paint is determined by calculating (1) the difference between the brightness of the received light that exceeds an average of the measured brightness by a predetermined amount, and the brightness that is less than the average of the measured brightness by the predetermined amount, and (2) the distance between the spot that gives the brightness that exceeds the average by the predetermined amount, and the spot that gives the brightness that is less than the average by the predetermined amount.

[Patent reference 1]
JP, 11-66119, A

[Patent reference 2]
JP, 10-324829, A
[Patent reference 3]
JP, 5-288690, A
[Patent reference 4]
JP, 9-318448, A

Nevertheless, according to the inventions disclosed by the patent references 3 and 4 presented above, the amount of reflected light is measured only along a predetermined line on the paint film, and only the brightness is considered in determining the mottling. For this reason, precision of the mottling determination is not sufficient. In other words, the mottling, which essentially is a two-dimensional characteristic, is determined based only on measurement data along a line (one dimension) and only on the brightness, and the mottling of the surface in two dimensions cannot be properly determined.

DISCLOSURE OF THE INVENTION

Accordingly, it is a general object of the present invention to provide a paint film mottling prediction method, a paint film mottling prediction program, a computer-readable storage medium, and a paint film mottling prediction apparatus that substantially obviate one or more of the problems caused by the limitations and disadvantages of the

related art.

To achieve these and other advantages and in accordance with the purpose of the invention, as embodied and broadly described herein, the invention provides, inter alia, a paint film mottling prediction method wherein a glitter representing value and color values acquired based on information of blended paints are substituted into a paint film mottling prediction formula, as detailed below.
In order to solve the problem, the present invention provides as follows.
According to an aspect of the present invention, a paint film mottling prediction method wherein a glitter representing value expressing properties of a brightness image of a paint film and color values of the paint film are substituted into a paint film mottling prediction formula, is characterized in that the method includes: a blending information acquisition step for acquiring blending information from paint film information of the paint film with reference to a blending information database that stores the blending information, and a paint film information acquisition step for acquiring the glitter representing value and the color values of the paint film from the blending information with reference to a paint film mottling forecast database that stores the glitter representing value and the color values.
The paint film mottling prediction method according to the present invention uses a paint film mottling prediction formula into which a glittering value that expresses properties of a brightness image of a paint film, and color values of the paint film are substituted. For this purpose, the present invention provides a step for acquiring blending information (wherein the blending information is obtained from paint film information of paint films with reference to a blending information database in which the blending information is stored), and a step for acquiring the glitter representing value and the color values of the paint film (wherein the glitter representing value and/or the color values are obtained from the blending information with reference to a paint film mottling forecast database in which the glitter representing value and the color values are stored). In this manner, the paint film mottling prediction method is provided.
According to another aspect of the present invention, a paint film mottling prediction method described above, is further characterized in that a paint film mottling prediction formula is generated through a process including: an image generation step for generating a brightness image of the paint film by irradiating light to the paint film, and receiving the light reflected by the paint film, a glitter representing value calculation step for calculating a glitter representing value expressing properties of a brightness image generated at the image generation step, a color value acquisition step for acquiring the color values of the reflected light received at predetermined angles with reference to the incident angle of the light irradiated to the paint film, colorimetric measurement of the reflected light being separately carried out, a visual evaluation value acquisition step for acquiring the visual evaluation value of the paint film mottling of the paint film, the visual evaluation being separately carried out, and a paint film mottling calculation formula generation step for generating the paint film mottling calculation formula based on the glitter representing value calculated at the glitter representing value calculation step, the color values acquired at the color value acquisition step, and the visual evaluation value acquired at the visual evaluation value acquisition step.
According to the present invention, the paint film mottling prediction formula is generated through steps as follows; an image generation step for generating a brightness image of the paint film by irradiating a light to the paint film, and receiving the light reflected by the paint film, a glitter representing value calculation step for calculation a glitter representing value that expressed properties of the brightness image generated at the image generation step, a color value acquisition step for acquiring color values at predetermined light-receiving angles of the light reflected by the paint film based on colorimetry separately performed, and a visual evaluation value acquisition step for acquiring a visual evaluation value of the paint film mottling separately evaluated. In this manner, the paint film mottling calculation formula generated based on the glitter representing value, the color values, and the visual evaluation value provides an accurate paint film mottling calculation.

According to yet another aspect of the present invention, the paint film mottling prediction method described above is further characterized in that the paint film mottling prediction formula is generated using QSAR analysis.

This aspect of the present invention is characterized by generating the paint film mottling prediction formula using QSAR analysis. In this manner, a mottling prediction formula suitable for a customer can be obtained.

According to yet another aspect of the present invention, the paint film mottling prediction method described above is further characterized in that the glitter representing value is a sum of gray-scale gradation step values of the brightness image to which a spatial-frequency differential process is applied.

This aspect of the present invention is characterized by defining the glitter representing value as a total of gradation step values of the brightness image to which spatial-frequency differential processing is carried out. In this manner, the glitter representing value can be easily obtained.

According to yet another aspect of the present invention, the paint film mottling prediction method described above is further characterized in that the spatial-frequency differential process is one of a Sobel filter, a Roberts filter, and a Laplacian filter.

This aspect of the present invention is characterized by using one of a Sobel filter, a Roberts filter, and a Laplacian filter as the spatial-frequency differential process. In this manner, commercially available software can be employed to obtain the glitter representing value.

According to yet another aspect of the present invention, the paint film mottling prediction method described above is further characterized in that the color values comprise at least one of a chroma value, an FF value of the chroma value, a brightness value, an FF value of the brightness value at the predetermined angles at which the light reflected by the paint film is received, a hue angle in the predetermined angles, and a hue angle difference.

This aspect of the present invention is characterized by using at least one of the color values obtained by irradiating a light to the paint film and receiving the light reflected by the paint film at predetermined light-receiving angles, namely, at least one of a chroma value, an FF value of the chroma value, a brightness value, an FF value of the brightness value, a hue angle of the predetermined angles, and a hue angle difference. In this manner, the mottling value can be accurately predicted using a color value suitable for the paint.

The present invention also provides a paint film mottling prediction program for a computer to execute, wherein the glitter representing value and the color values are substituted into the paint film mottling prediction formula. In this manner, the paint film mottling prediction is facilitated.

The present invention also provides a computer-readable storage medium that stores the paint film mottling prediction program of the present invention. By substituting the glitter representing value and the color values acquired from the blending information of paints to be blended into the paint film mottling prediction formula stored in the computer-readable storage medium, a predicted mottling value of a blended paint film is obtained.

The present invention provides a paint film mottling prediction apparatus for predicting the paint film mottling based on the glitter representing value and the color values, the paint film mottling prediction apparatus including a blending information database, a paint film mottling forecast database, blending information acquisition means for acquiring the blending information from the blending information database, and paint film information acquisition means for acquiring the glitter representing value and/or the color values from the blending information referring to the paint film mottling forecast database. In this manner, the paint film mottling prediction apparatus is provided.

As described above, the present invention can provide a paint film mottling prediction apparatus for predicting paint film mottling by substituting a glitter representing value acquired based on the blending information of blended paints and color values into a paint film mottling prediction formula. In addition, the present invention can provide a paint film mottling prediction method for predicting the paint film mottling, a paint film mottling prediction program, and a computer readable recording medium storing the paint film mottling prediction program.

## BRIEF DESCRIPTION OF DRAWINGS

Fig. 1 is a flowchart showing a process for generating a formula for calculating paint film mottling;
Fig. 2 is a chart for explaining calculation of a hue angle;
Fig. 3 is a flowchart showing a process for generating basic data;
Fig. 4 is a flowchart showing an application process of a correlation formula;
Fig. 5 is a table showing pigment compositions (PWC);

Fig. 6 is a table showing paint conditions;
Fig. 7 is a table listing examples of colorimetry values and color values of paint films;
Fig. 8 is a table showing examples of results of QSAR analysis;
Fig. 9 is graph showing correlation of visual mottling to calculate mottling; and
Fig. 10 is a block diagram of a paint film mottling prediction apparatus.

BEST MODE FOR CARRYING OUT THE INVENTION

In the following, embodiments of the present invention are described with reference to the accompanying drawings.

(Generating the paint film mottling calculation formula)

The paint film mottling prediction is carried out by substituting data that influence the paint film mottling of the paint into a paint film mottling calculation formula. Accordingly, if one is already available, that one can be used. If, on the other hand, no calculation formulas are available, one has to be generated. In the following, a process for generating a paint film mottling calculation formula is explained.

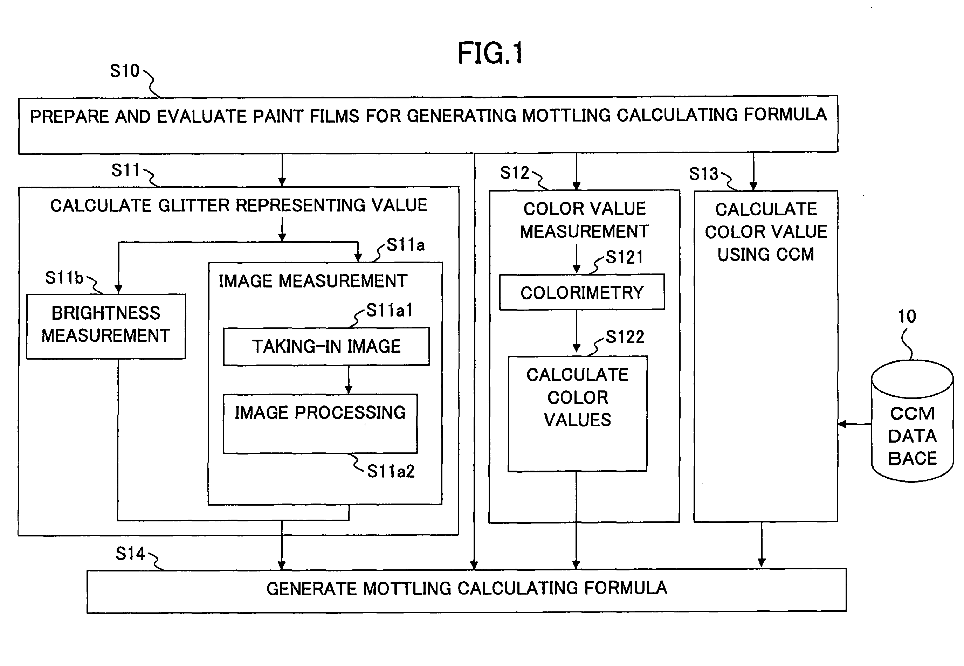

Fig. 1 shows a process for generating the paint film mottling calculation, the process including step S10 for preparing and evaluating paint films painted on panels, step S11 for calculating the glitter representing value, step S12 for measuring colors (colorimetry) and calculating color values, step S13 for calculating color values using CCM (computer color matching) technique, and step S14 for generating the paint film mottling calculation formula. Here, as for the steps S12 and S13, either is to be performed.

The process is explained in sequence.

At step S10, painted panels for generating the paint film mottling calculation formula are prepared as follows.

(1) A plurality of paints using different glittering color materials and color pigments is prepared. The greater the number of paints that are prepared, the higher is the correlation obtained between visual mottling values and calculated mottling values.

(2) Then, panels are painted with the paints prepared as above such that a paint film is formed on the painted panels. At this time, plural panels are painted with the same paint under different spraying conditions, which is repeated for all the paints.

(3) The panels to be prepared are in dimensions of 300x400 mm or more to facilitate visual evaluation of mottling.

Further, visual evaluation of mottling is performed concerning the painted panels prepared as above, and visual evaluation data, which are values, are stored in a visual mottling database. The visual mottling values stored in the visual mottling database serve as parameters at step S14 that will be explained below.

Step S11 includes step S11a for an image measuring process and step S11b for a brightness measuring process, either of which is to be performed. Step S11a further includes step S11a1 for taking in an image, and step S11a2 for processing the image.

At step S11a1, images of the painted panels prepared at step S10 are taken in using an image taking-in apparatus, such as a scanner, a CCD camera, and an image pick-up apparatus with appropriate software for taking in images. Then, the images are saved with suitable file names attached.

At step S11a2, a pretreatment, such as noise removal, is carried out on the images taken in at step S11a1, and a pseudo-glitter representing value is extracted by image-processing software such as a Sobel filter, a Roberts filter, and a Laplacian filter that performs a spatial-frequency differential process. Subsequently, a glitter representing value of the image is calculated.

An example of calculation for obtaining the glitter representing value is as follows.

(1) Gradation step values are totaled, and the sum is used as the glitter representing value, the gradation step values being those of the image on which the spatial-frequency differential processing is performed.

(2) After suitable pretreatment, such as noise removal, a gradation step value that has the maximum frequency (the number of occurrences is the greatest) is made to be the glitter representing value, the gradation step value excepting the white value and the black value.

As indicated above, the alternative is that in step S11 the process proceeds to step S11b for the brightness measuring process. At step S11b, a pseudo-glitter representing value is obtained using a method for continuously measuring the brightness of the paint film, which is prepared at step S10, based on the amount of the receiving light that is aspecularly reflected by the paint film, for example, ALCOPE made by Kansai Paint Engineering Company is used.

Next, color values are acquired using one of steps S12 and S13 (refer to Fig. 1).

Step S12 includes colorimetry step S121 and a color value calculation step S122.

At the colorimetry step S121, the paint films of the painted panels prepared at step S10 are measured using a variable angle color meter (a colorimeter), and colorimetric values are obtained. Measurement conditions are the incident-light angle being set at 45 degrees, light-receiving angles being set at 15 degrees, 25 degrees, 45 degrees, 75 degrees, and 110 degrees. At this time, CIELAB is used as the color coordinate system in this example.

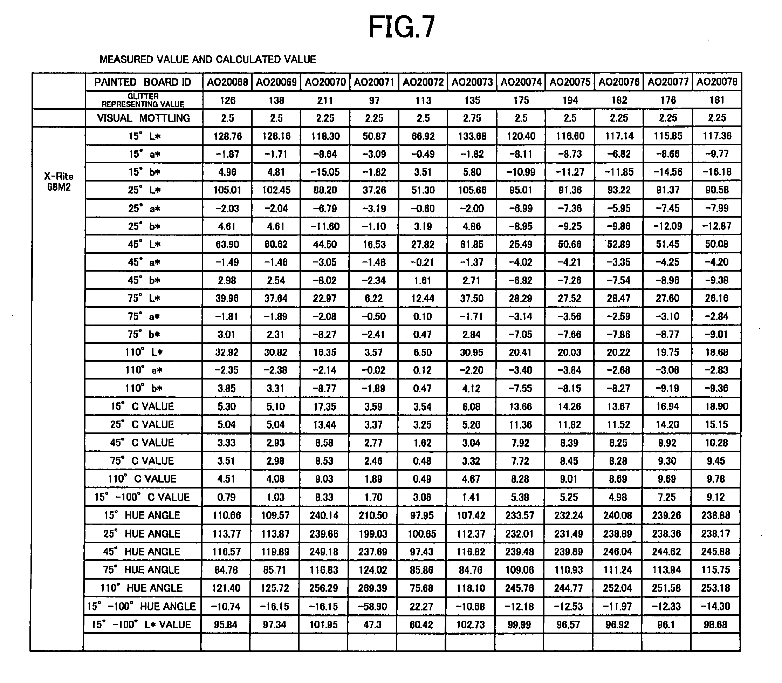

Then, the color value calculation process step S122 is performed using the colorimetric values obtained at step S121. Here, the color values to be used are L*, a*, and b* values measured at 15, 25, 45, 75, and 110 degrees, and values calculated therefrom (refer to Fig. 7).

Based on the colorimetric values measured at step S121, each color value is calculated at step S122 according to the following formulae.

a. C* value at 15 degrees = $(15 \text{ degree } (a*)^2 + 15 \text{ degree}(b*)^2)^{0.5}$

b. C* value at 25 degrees = $(25 \text{ degree } (a*)^2 + 25 \text{ degree } (b*)^2)^{0.5}$

c. C* value at 45 degrees = $(45 \text{ degree } (a*)^2 + 45 \text{ degree } (b*)^2)^{0.5}$

d. C* value at 75 degrees = $(75 \text{ degree } (a*)^2 + 75 \text{ degree } (b*)^2)^{0.5}$

e. C* value at 110 degrees = $(110 \text{ degree } (a*)^2 + 110 \text{ degree}(b*)^2)^{0.5}$

f. C* value FF= (C* value at 15 degrees - C* value at 110 degrees)

g. hue angle difference [hue angle at 15 degrees - hue angle at 110 degrees] = (15 degree hue angle) - (110-degree hue angle)

h. 15 degree hue angle

i. 25 degree hue angle

j. 45 degree hue angle

k. 75 degree hue angle

l. 110 degree hue angle

m. Brightness FF= (L* value at 15 degrees - L* value at 110 degrees)

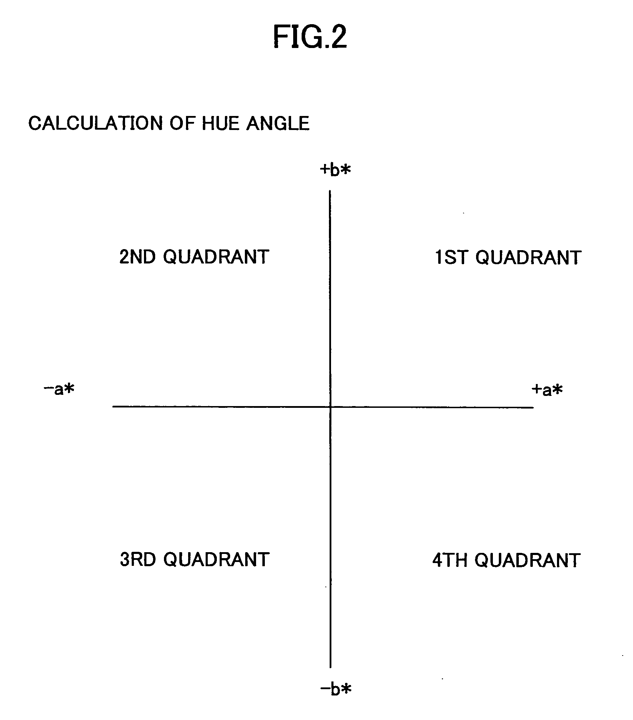

Here, a hue angle is calculated as follows depending on to which quadrant the hue angle belongs (refer to Fig. 2 showing a*-b* plane.)

The hue angle in the 1st quadrant is expressed by $\tan^{-1}(b*/a*)$.

The hue angle in the 2nd quadrant is expressed by $\tan^{-1}(-a*/b*)+90$ degrees.

The hue angle in the 3rd quadrant is expressed by $\tan^{-1}(b*/a*)+180$ degrees.

The hue angle in the 4th quadrant is expressed by $\tan^{-1}(a*/-b*)+270$ degrees.

Following the color value measurement step S12, the paint film mottling calculation formula is generate at step S14.

Referring to Fig. 1, step S13, which can be dispensed with if the step S12 is performed, is for acquiring the color values by CCM (computer color matching) using a CCM database that stores multi-angle spectral-reflectance data (goniospectral reflectance data) of coloring pigments and glittering color materials, which can also determine colors to be blended for obtaining a predetermined color.

In the CCM database, information concerning a peculiar wavelength, reflection factor data, etc., of each of the coloring pigments and glittering pigments is stored such that a blending ratio can be determined. Accordingly, if a blending ratio of the pigments used for a combination is given, the color values can be acquired.

Next, step S14 for generating the calculation formula of paint film mottling is explained (refer to Fig. 1).

Since the mottling is dependent on psychophysical values, such as glitter and hue, a correlation formula between the visual mottling and the psychophysical values obtained by measurements is to be established. This is the difference between the present invention using psychophysical values and conventional practices considering only physical values, such as the brightness of the reflective light. In other words, since the visual mottling is not a physical value but a psychophysical value, the present invention aims at obtaining correspondence of visually measured mottling values to calculated mottling values by defining a correlation formula wherein the psychophysical values and the visual mottling are considered.

In the present invention, the formula for calculating paint film mottling is obtained as follows.

(1) First, a visual mottling value y is defined as a function of factors x1 through xn. Here, as the factors x1 through xn, the glitter representing value acquired at the glitter representing value calculation step S11, the colorimetric values acquired at the colorimetry step S121, and the color values acquired at the color value calculation step S122 are used (refer to Fig. 7).

(2) A table listing y, and x1 through xn, such as shown by Fig. 7, is generated.

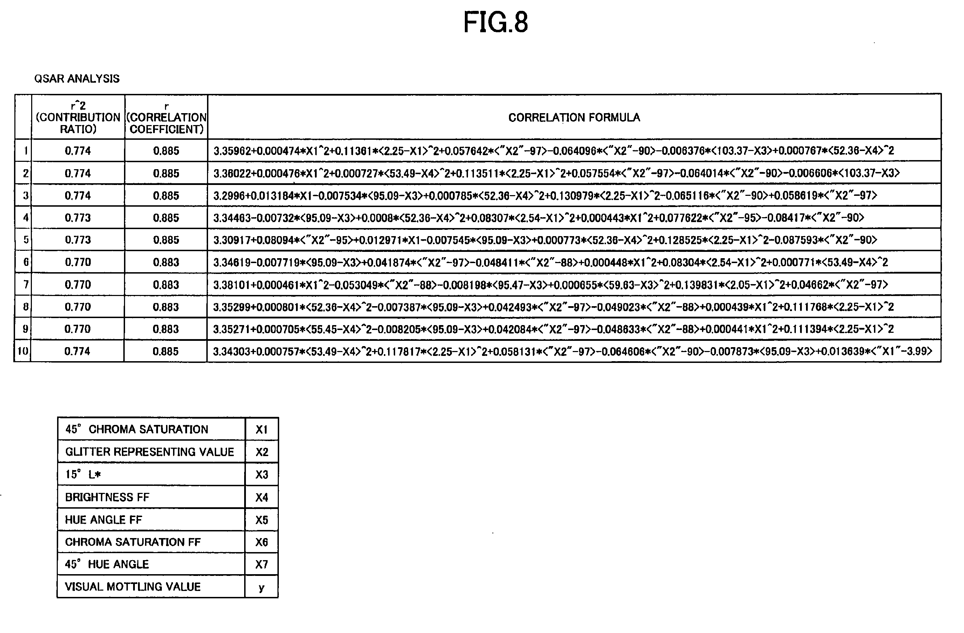

(3) Using QSAR analysis software, the table described as above (2), which lists the results and the factors, is analyzed, and a correlation formula is obtained, wherein factors xi that give high correlation to y are selectively used, as shown by Fig. 8.

(4) In this manner, the mottling of the paint films is numerically expressed (i.e., quantified) using the correlation formula.

(5) The correlation formula varies with kinds of data (properties of the paint film) to be used for analysis, and factors for analysis.

Therefore, by using painted panels provided by a customer, correlation formulas suitable for the customer can be generated.

Further, a mottling value that meets the requirement of the customer can be calculated by using the correlation formula.

Although the case wherein the color values are obtained using CCM at step S13 is explained, if a "paint film mottling forecast database" that is described below at "Basic data origination" is already prepared, the glitter representing value and the color values can be acquired from the paint film mottling forecast database, and the process of step S11 is dispensed with.

(Basic data origination)

As mentioned above, the blending information of the paint concerned can be determined by referring to the CCM database. Further, based on the blending information, the glitter representing value and the color values of the paint can be determined, the values affecting the paint film mottling of the paint concerned. Further, the visual mottling evaluation rank y can be calculated using the glitter representing value and the color values of the paint.

Therefore, in order to predict paint film mottling of a paint film based on the blending information of a blended paint, the glitter representing value and the color values of each pigment and glittering color material contained in the paint must be beforehand acquired.

Further, since the precision of the paint film mottling prediction is improved if the glitter representing value and the color values of the blended paint are used, the glitter representing value and the color values of a blended paint, the paint film mottling of which is to be measured, are beforehand acquired.

Then, the glitter representing value and the color values of the blended paint, or the coloring pigments and glittering color materials contained in the blended paint are measured.

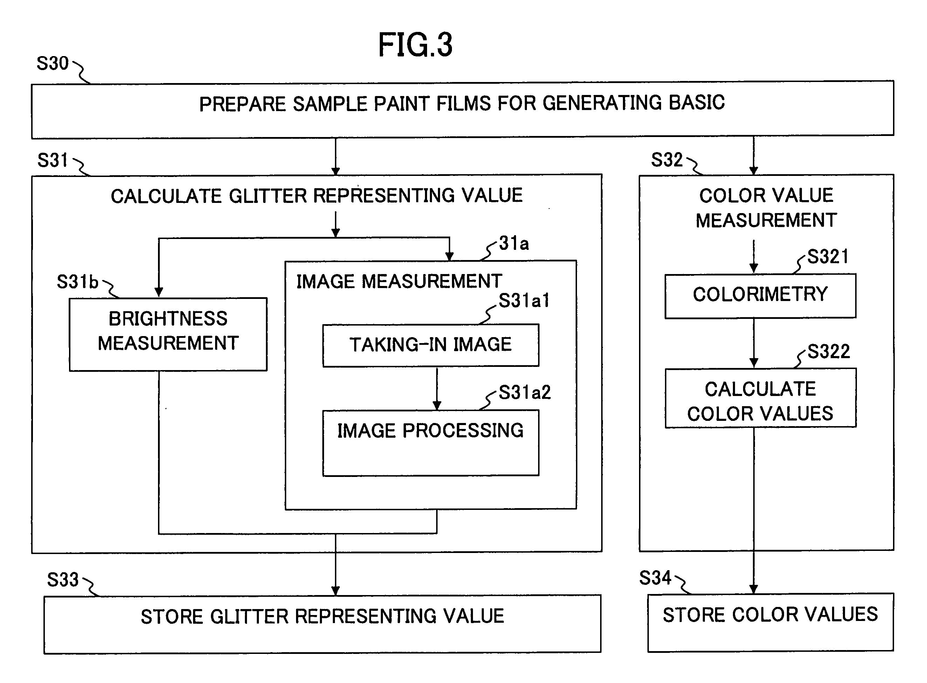

Generation of the basic data for each color material is explained with reference to Fig. 3. The basic data are generated through a process including step S30 for preparing painted panels, step S31 for calculating the glitter representing value, step S32 for measuring the color values, step S33 for storing the glitter representing value, and S34 for storing the color values. Here, step S32 can be eliminated if predetermined color values of the color material are available in the CCM database.

Steps S30 through S34 are explained in sequence.

At step S30, panels painted with various glittering paints in various pigment density are prepared, which panels are used to determine the glitter representing value and the color values of each paint, the values being used in predicting the paint film mottling. Here, the panels are painted under the same paint conditions as described in connection with step S10 (preparation of painted panels for generating the paint film mottling calculation formula). Here, each panel may be painted with an individual paint, or with a blended paint.

Subsequently, step S31 for calculating the glitter representing value is performed, which is the same process as step S11 for calculating the glitter representing value, and the glitter representing value is obtained.

At step S32, the colorimetric values are measured by the same method as described for step S12 using a variable angle colorimeter, and the color values are calculated from the colorimetric values. As mentioned above, step S32 can be dispensed with if predetermined color values are available in the CCM database for the color material used for combination.

Subsequently, at step S33, the glitter representing value as calculated above is stored, and at step S34, the color values as obtained above are stored in association with the pigment and the glittering color material in the paint film mottling forecast database.

The process shown in Fig. 3 is performed for each color material such that the basic data are stored in the paint film mottling forecast database.

Further, the basic data of blended paints can also be generated and stored by the same process as above.

(Application of the correlation formula (the paint film mottling prediction formula))

The paint film mottling calculation formula generated as above is used to obtain the paint film mottling as explained in the following.

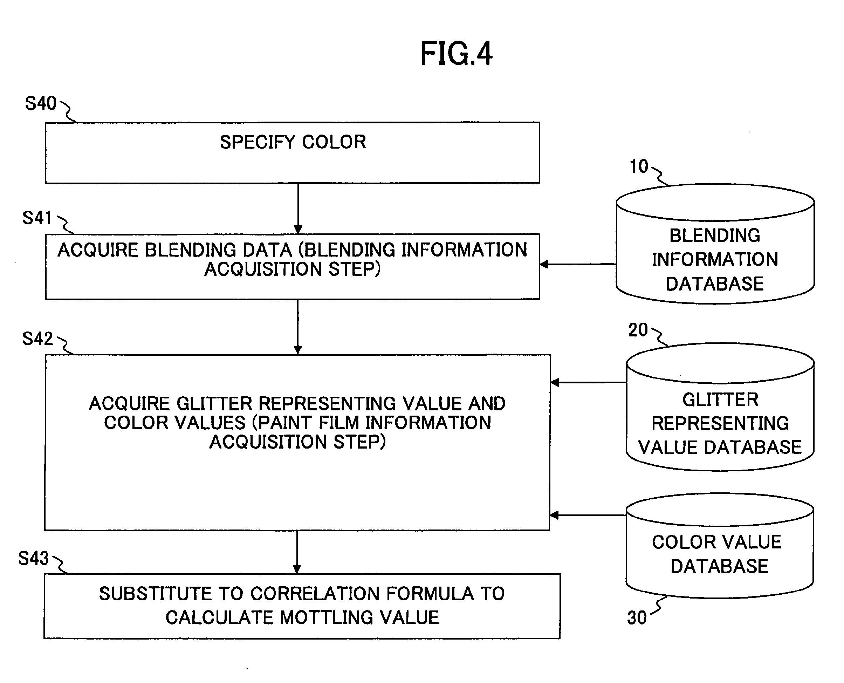

As shown in Fig. 4, the correlation formula (the paint film mottling prediction formula) is used to obtain the paint film mottling, the process of which includes step S40 for determining colors, step S41 for acquiring blending information, step S42 for acquiring the glitter representing value and color values, and step S43 for substituting into the correlation formula to obtain the mottling value.

At step S40, a user, for example, specifies a color using a personal computer, and determines a specified color. The color coordinate systems in which the color is specified can be one of CIELAB, RGB, XYZ, etc.

At step S41, color blending for the specified color is obtained referring to the blending information database 10.

At step S42, the glitter representing value and color values are obtained from a glitter representing value database 20, and a color value database 30, respectively, which databases comprise a paint film mottling forecast database.

Subsequently, at step S43, the glitter representing value and color values acquired at step S42 are substituted into the correlation formula (paint film mottling prediction formula) obtained at step S14, and the paint film mottling value is obtained.

Although the glitter representing value and the color values substituted into the correlation formula are estimated from the paint blending information and glittering material information in the explanation above, these values may be obtained by measuring sample painted panels, or actual items such as cars.

[Example]

Next, the embodiments of the present invention actually experimented with are explained with reference to the attached drawings.

(A. Preparation of painted panels)

(1) Preparation of painted panels for generating basic data

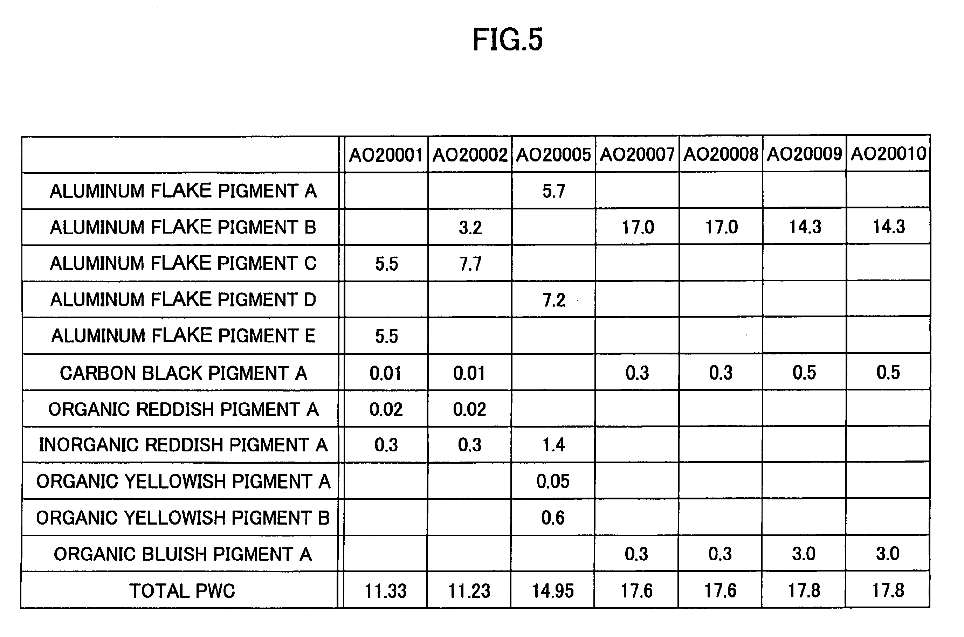

About 80 different waterborne paints for automobile 2-coat 1-bake were prepared, pigment composition (pwc) of which was 10 parts of an acrylic resin, 30 parts of a melamine resin, and 40 parts of a urethane system emulsion. Fig. 5 shows seven paints selected from the "about 80 paints", the seven paints being identified by A020001, A020002, A020005, A020007, A020008, A020009 and A020010, respectively.

(2) Painting

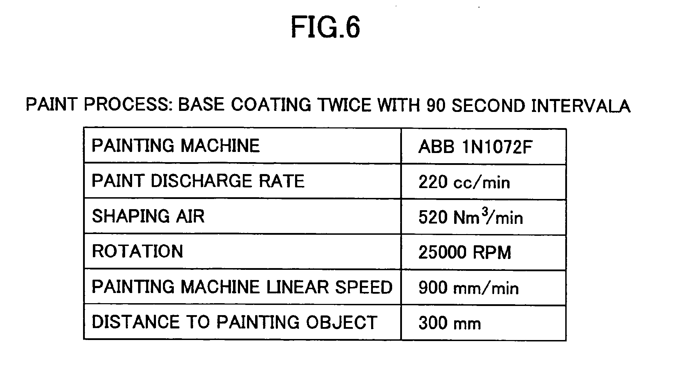

The paints prepared at (1) above were applied to panels using a bell type paint machine "ABB1N1072F" made by ABB under conditions described in Fig. 6. The panels were prepared in dimensions of 300 mm x 400 mm; and electrodeposition for cars and middle coating were applied to the panels. The panels were preheated at 80 degrees C for 3 minutes; a clear top coat was painted on the panels; and baking was performed on the panels at 140 degrees C for 30 minutes.

Here, the painting included two base coating steps, with a 90 second interval in-between.

(B. Measurement of the glitter representing value)

(1) Taking in of an image

Image taking-in software and a flat bed scanner (Canoscan D2400U) were used to take in the image of the painted panels prepared above (at A. Preparing paint film) to a personal computer as bit map data having resolution of 300 dpi and a 256-step gray scale.

(2) Image processing

Using image-processing software (Adobe Photoshop), both edges containing a large amount of noise were removed from the image that was taken in above (at B. (1) Taking in of an image), then a Sobel filter was applied. After a post-treatment, the image was quantified (made to be numerically expressed) based on the frequency of edge detection, and the like, and the quantified value was made to serve as the glitter representing value.

In addition, the glitter representing value of the paint was calculated by the following formula.

```
    The glitter representing value of a paint
 = (the glitter representing value of each glittering
material x content ratio of the glittering material)
x ratio of the glittering material to all the
pigments          .... Formula (1)
```

(C. Measurement of a color value)

Colorimetric values of the painted panels were obtained using MA-68II (Portable Multi-Angle Spectrophotometer) made by X-Rite. The color coordinate system of CIELAB was used.

MA-68II is a multi-angle spectrophotometer capable of aspecular measurements of L*a*b*, $\Delta$L*$\Delta$a*$\Delta$b*, L*C*h degrees, $\Delta$L*, $\Delta$C*, $\Delta$H*, a flop index, $\Delta$flop index, and so on. Further, the spectrophotometer has a 45-degree illumination, enabling measurements at 15, 25, 45, 75, and 110 degrees.

Using the colorimetric values obtained as above, color values described at step S322 (color value calculation step) were calculated.

Here, the color values obtained by CCM may be used.

(D. Mottling visual evaluation)

Mottling of the panels prepared at "preparing painted panels" was visually evaluated, and a visual mottling value was determined.

(E. Calculation of a correlation formula)

Then, the correlation formula was generated using QSAR analysis software (Cerius2 made by Accelrys) with the visual mottling value serving as an objective variable, and the glitter representing value, the colorimetric values, and the color values being the independent variables.

Fig. 7 tables the glitter representing value, the visual mottling value, the colorimetric values, and the color values of the painted panels having IDs "A020068" through "A020078".

An example of the QSAR analysis is shown in Fig. 8, where 10 correlation formulae and respective parameters that contribute to each of the correlation formulas are shown. There, X1 represents the chroma saturation (C*) at a 45 degree light-receiving angle, X2 represents the glitter representing value, X3 represents L* at a 15 degree light-receiving angle, X4 represents the brightness FF (i.e., 15 degree L* value -110 degree L* value), X5 represents the hue angle FF (i.e., 15 degree hue angle - 110 degree hue angle), X6 represents the chroma saturation FF (i.e., 15 degree C* value - 110 degree C* value), X7 represents the hue angles at a 45 degree light-receiving angle, and y represents the visual mottling.

From the QSAR analysis results, a mottling calculation formula that gives the highest correlation to the visual mottling (serving as an objective variable) was made the mottling value calculation formula y. The correlation formula given in the first line of Fig. 7 was adopted, which was generalized as follows.

$$y=A+bX1^2+cX1a^2+dX2a+eX2b+fX3a+gX4a^2 \ ... \ Formula \ (2)$$

Here, the variables are as follows.
y: mottling value
X1= 45 degree C* value,
X2= glitter representing value
X3= 15 degree L* value
X4= brightness FF value (15 degree L* value - 110 degree L* value)
X1a=(2.25-X1)
X2a=(X2-97.0)
X2b=(X2-90.0)
X3a=(103.37-X3)

X4a=(52.36-X4)

Here, as for X1a, X2a, X2b, X3a, and X4a, if the value is less than "0", the value is made to "0".

That is, X1a is valid when X1 is less than 2.25, X2a is valid when X2 exceeds 97, X2b is valid when X2 exceeds 90, X3a is valid when X3 is less than 103.37, and X4a is valid when X4 is less than 52.36.

Further, a through g are constants having values as follows.
a=3.35962 b=0.000474 c=0.11361 d=0.057642 e=-0.064096 f=-0.006376 g=0.000767

Here, the correlation coefficient R of the visual mottling value to the mottling value according to Formula (2) was 0.885.

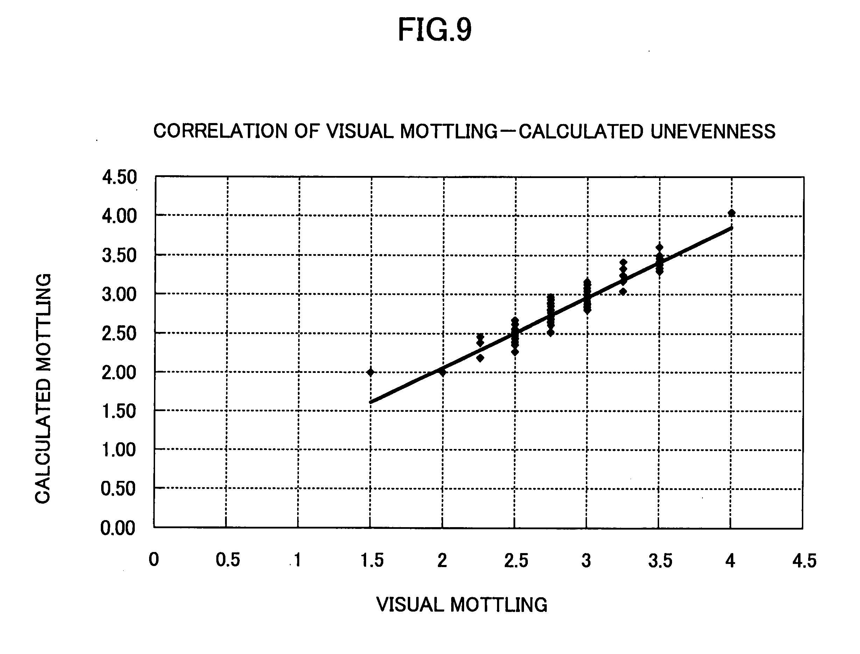

As seen from Fig. 9, the correlation between the visual mottling and the calculated mottling according to the correlation formula (2) is high. Accordingly, the correlation formula (2) proves to be a useful tool for predicting the mottling.

(F. Application of the mottling formula)

(1) Calculation of blend

The paint color serving as the target was determined, the blending information of which was determined with reference to the blending information database, and as follows.

| | |
|---|---|
| Aluminum flake pigment A | 0.2 |
| Aluminum flake pigment B | 11.4 |
| Carbon black pigment A | 0.1 |
| Organic reddish pigment A | 0.04 |
| Organic bluish pigment A | 0.4 |
| Total | 12.14 |

(2) Calculation of the glitter representing value

Based on Formula (1) described above, the glitter representing value was calculated.

As the result, the glitter representing value was determined to be 130.94.

(3) Acquisition of a color value

The prediction color values obtained by CCM were used.

(4) Calculation of the mottling value

The glitter representing value and the color values obtained as above were substituted into the mottling calculation formula, Formula (2), for obtaining the mottling value.

Here, X1 - X4a were provided as follows.
X1=11.13 X2=130.94 X3=117.93 X4=96.17 X1a=0 X2a=33.94 X2b=40.94 X3a=0 X4a=0

The calculation result, that is, the mottling value y was determined to be 2.75.

Since the visual mottling of the painted panel "A020078" was 2.25, the calculated result sufficiently matches, and Formula 2 provides an accurate prediction.

In this manner, the mottling value almost equal to the visual evaluation was acquired by the calculation formula according to the present invention.

Since the embodiment of the present invention uses the color values of a target paint film, an accurate prediction of paint film mottling can be obtained.

(Paint film mottling prediction apparatus)

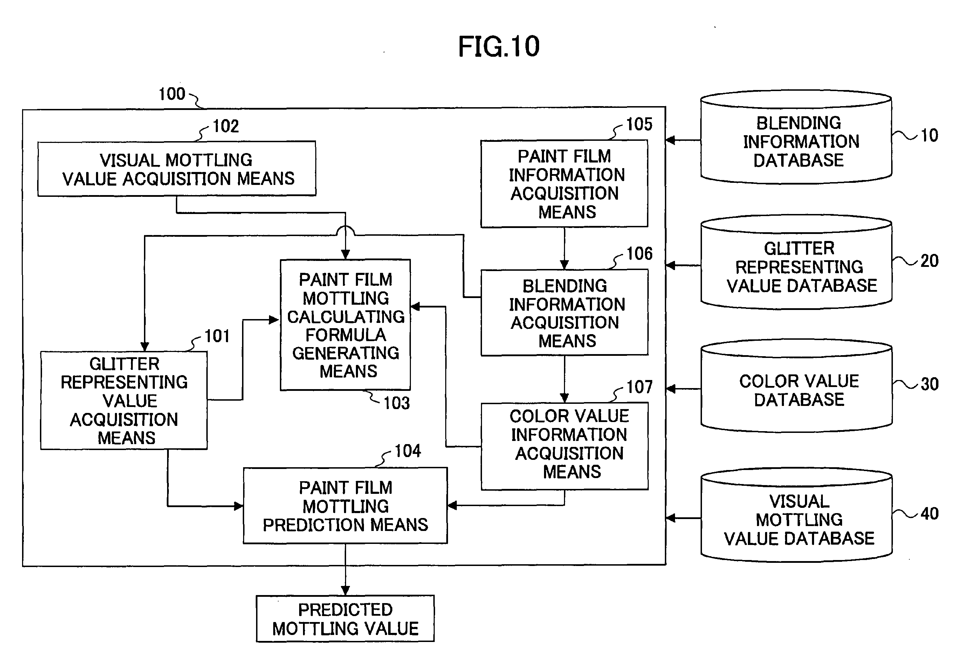

Fig. 10 is a block diagram of a paint film mottling prediction apparatus 100 according to the embodiment of the present invention. The paint film mottling prediction apparatus 100 includes the blending information database 10 for storing blending information, the glitter representing value database 20 for storing glitter representing values, the color value database 30 for storing color values, a visual mottling value database 40 for storing visual mottling values, glitter representing value acquisition means 101 for acquiring glitter representing values of a blended paint and individual color materials, visual mottling acquisition means 102 for acquiring visual mottling values of painted panels, paint film mottling prediction formula generating means 103 for generating a paint film mottling prediction formula, paint film mottling prediction means 104 for calculating the predicted paint film mottling by substituting the glitter representing value and the color values into the paint film mottling prediction formula, paint film information acquisition means 105 for acquiring paint film information, blending information acquisition means 106 for acquiring blending information from the paint film information, and color information acquisition means 107 for acquiring color information from the blending information.

The blending information database 10 stores goniospectral reflectance data of various coloring pigments and glittering color materials, such that a blending ratio of a color specified by color systems such as CIELAB, RGB, and XYZ can be determined. Further, the color values of a given color can be calculated using the blending information database 10. Here, the CCM database of a CCM database apparatus can replace the blending information database 10.

The glitter representing value database 20 stores glitter representing values that express properties of brightness images of paint films of the painted panels, the glitter representing values being acquired at step S31 and stored at step S33 in association with the pigments. Further, the color value database 30 stores color values of the paint films, the color values being acquired at step S32 and stored at step S34 in association with the pigments.

The glitter representing value acquisition means 101 acquires the glitter representing value of a blended paint, or each color material through step S11 (glitter representing value calculation step), or step S31 (glitter representing value calculation step). The visual mottling acquisition means 102 acquires the visual mottling value of the paint films of the painted panels prepared and evaluated at step S10 (preparation and evaluation of painted panels for generating the mottling calculation formula). The paint film mottling prediction formula generation means 103 includes image generation means for irradiating light to a paint film and generating a brightness image of the paint film based on the light that is reflected, glitter representing value calculation means for calculating the glitter representing value expressing properties of the brightness image generated by the image generation means, color value acquisition means for acquiring the color values of the light that is separately measured, the light being received at predetermined angles in reference to the incident light to the paint film, and visual evaluation value acquisition means for acquiring the visual evaluation value of the paint film mottling that is evaluated separately; wherein QSAR analysis is performed based on the glitter representing value acquired by the glitter representing value acquisition means 101, the color values acquired by the color value acquisition means, and the visual evaluation value acquired by the visual evaluation value acquisition means such that the paint film mottling prediction formula is generated.

The paint film mottling prediction means 104 obtains the predicted paint film mottling by substituting the glitter representing value acquired by the glitter representing value acquisition means 101, and the color values acquired by the color information acquisition means 107 into the paint film mottling prediction formula generated by the paint film mottling prediction formula generation means 103.

The paint film information acquisition means 105 acquires information about a paint film. The blending information acquisition means 106 acquires blending information with reference to the blending information database 10 based on the paint film information acquired by the paint film information acquisition means 105.

The color information acquisition means 107 acquires color information based on the blending information acquired by the blending information acquisition means 106.

As described above, the present invention provides the paint film mottling prediction method, the paint film mottling prediction program, the computer-readable storage medium, and the paint film mottling prediction apparatus, wherein the mottling of a blended paint is predicted by substituting the glitter representing value and the color values of the paint concerned based on the blending information of the blended paint into the paint mottling calculation formula.

## Claims

1. A paint film mottling prediction method wherein a glitter representing value expressing properties of a brightness image of a paint film and color values of the paint film are substituted into a paint film mottling prediction formula, the method comprising:

   a blending information acquisition step for acquiring blending information from paint film information of the paint film with reference to a blending information database that stores the blending information, and
   a paint film information acquisition step for acquiring the glitter representing value and the color values of the paint film from the blending information with reference to a paint film mottling forecast database that stores the glitter representing value and the color values.

2. A paint film mottling prediction method wherein a paint film mottling prediction formula is generated through a process comprising:

   an image generation step for generating a brightness image of the paint film by irradiating light to the paint film, and receiving the light reflected by the paint film,

a glitter representing value calculation step for calculating a glitter representing value expressing properties of a brightness image generated at the image generation step,

a color value acquisition step for acquiring the color values of the reflected light received at predetermined angles with reference to the incident angle of the light irradiated to the paint film, colorimetric measurement of the reflected light being separately carried out,

a visual evaluation value acquisition step for acquiring the visual evaluation value of the paint film mottling of the paint film, the visual evaluation being separately carried out, and

a paint film mottling calculation formula generation step for generating the paint film mottling calculation formula based on the glitter representing value calculated at the glitter representing value calculation step, the color values acquired at the color value acquisition step, and the visual evaluation value acquired at the visual evaluation value acquisition step.

3.  The paint film mottling prediction method as claimed in claim 1, wherein the paint film mottling prediction formula is generated using QSAR analysis.

4.  The paint film mottling prediction method as claimed in claim 1, wherein the glitter representing value is a sum of gray-scale gradation step values of the brightness image to which a spatial-frequency differential process is applied.

5.  The paint film mottling prediction method as claimed in claim 4, wherein the spatial-frequency differential process is one of a Sobel filter, a Roberts filter, and a Laplacian filter.

6.  The paint film mottling prediction method as claimed in claim 2, wherein the color values comprise at least one of a chroma value, an FF value of the chroma value, a brightness value, an FF value of the brightness value at the predetermined angles at which the light reflected by the paint film is received, a hue angle in the predetermined angles, and a hue angle difference.

7.  A computer-executable program for executing the paint film mottling prediction method as claimed in claim 1.

8.  A computer-readable storage medium for storing the computer-executable program as claimed in claim 7.

9.  A paint film mottling prediction apparatus for predicting paint film mottling by substituting a glitter representing value expressing properties of a brightness image of a paint film and color values of the paint film into a paint film mottling prediction formula, the apparatus comprising:

    a blending information database for storing blending information,
    a paint film mottling forecast database for storing the glitter representing value and the color values,
    blending information acquisition means for acquiring the blending information from paint film information of the paint film with reference to the blending information database, and
    paint film information acquisition means for acquiring the glitter representing value and the color values of the paint film from the blending information with reference to the paint film mottling forecast database.

# FIG.1

S10 — PREPARE AND EVALUATE PAINT FILMS FOR GENERATING MOTTLING CALCULATING FORMULA

S11 — CALCULATE GLITTER REPRESENTING VALUE

S11b — BRIGHTNESS MEASUREMENT

S11a — IMAGE MEASUREMENT

S11a1 — TAKING-IN IMAGE

S11a2 — IMAGE PROCESSING

S12 — COLOR VALUE MEASUREMENT

S121 — COLORIMETRY

S122 — CALCULATE COLOR VALUES

S13 — CALCULATE COLOR VALUE USING CCM

10 — CCM DATA BACE

S14 — GENERATE MOTTLING CALCULATING FORMULA

EP 1 621 259 A1

# FIG.2

CALCULATION OF HUE ANGLE

+b*

2ND QUADRANT | 1ST QUADRANT

−a* +a*

3RD QUADRANT | 4TH QUADRANT

−b*

# FIG.3

EP 1 621 259 A1

**S30** — PREPARE SAMPLE PAINT FILMS FOR GENERATING BASIC

**S31** — CALCULATE GLITTER REPRESENTING VALUE

**31a** — IMAGE MEASUREMENT

**S31b** — BRIGHTNESS MEASUREMENT

**S31a1** — TAKING-IN IMAGE

**S31a2** — IMAGE PROCESSING

**S32** — COLOR VALUE MEASUREMENT

**S321** — COLORIMETRY

**S322** — CALCULATE COLOR VALUES

**S33** — STORE GLITTER REPRESENTING VALUE

**S34** — STORE COLOR VALUES

# FIG.4

S40 → [ SPECIFY COLOR ]

S41 → [ ACQUIRE BLENDING DATA (BLENDING INFORMATION ACQUISITION STEP) ] ← 10 [ BLENDING INFORMATION DATABASE ]

S42 → [ ACQUIRE GLITTER REPRESENTING VALUE AND COLOR VALUES (PAINT FILM INFORMATION ACQUISITION STEP) ] ← 20 [ GLITTER REPRESENTING VALUE DATABASE ]

← 30 [ COLOR VALUE DATABASE ]

S43 → [ SUBSTITUTE TO CORRELATION FORMULA TO CALCULATE MOTTLING VALUE ]

EP 1 621 259 A1

## FIG.5

| | AO20001 | AO20002 | AO20005 | AO20007 | AO20008 | AO20009 | AO20010 |
|---|---|---|---|---|---|---|---|
| ALUMINUM FLAKE PIGMENT A | | | 5.7 | | | | |
| ALUMINUM FLAKE PIGMENT B | | 3.2 | | 17.0 | 17.0 | 14.3 | 14.3 |
| ALUMINUM FLAKE PIGMENT C | 5.5 | 7.7 | | | | | |
| ALUMINUM FLAKE PIGMENT D | | | 7.2 | | | | |
| ALUMINUM FLAKE PIGMENT E | 5.5 | | | | | | |
| CARBON BLACK PIGMENT A | 0.01 | 0.01 | | 0.3 | 0.3 | 0.5 | 0.5 |
| ORGANIC REDDISH PIGMENT A | 0.02 | 0.02 | | | | | |
| INORGANIC REDDISH PIGMENT A | 0.3 | 0.3 | 1.4 | | | | |
| ORGANIC YELLOWISH PIGMENT A | | | 0.05 | | | | |
| ORGANIC YELLOWISH PIGMENT B | | | 0.6 | | | | |
| ORGANIC BLUISH PIGMENT A | | | | 0.3 | 0.3 | 3.0 | 3.0 |
| TOTAL PWC | 11.33 | 11.23 | 14.95 | 17.6 | 17.6 | 17.8 | 17.8 |

# FIG.6

PAINT PROCESS: BASE COATING TWICE WITH 90 SECOND INTERVALA

| PAINTING MACHINE | ABB 1N1072F |
|---|---|
| PAINT DISCHARGE RATE | 220 cc/min |
| SHAPING AIR | 520 Nm$^3$/min |
| ROTATION | 25000 RPM |
| PAINTING MACHINE LINEAR SPEED | 900 mm/min |
| DISTANCE TO PAINTING OBJECT | 300 mm |

# FIG.7

MEASURED VALUE AND CALCULATED VALUE

| | PAINTED BOARD ID | AO20068 | AO20069 | AO20070 | AO20071 | AO20072 | AO20073 | AO20074 | AO20075 | AO20076 | AO20077 | AO20078 |
|---|---|---|---|---|---|---|---|---|---|---|---|---|
| | GLITTER REPRESENTING VALUE | 126 | 138 | 211 | 97 | 113 | 135 | 175 | 194 | 182 | 176 | 181 |
| | VISUAL MOTTLING | 2.5 | 2.5 | 2.25 | 2.25 | 2.5 | 2.75 | 2.5 | 2.5 | 2.25 | 2.25 | 2.25 |
| X-Rite 68M2 | 15° L* | 128.76 | 128.16 | 118.30 | 50.87 | 66.92 | 133.68 | 120.40 | 116.60 | 117.14 | 115.85 | 117.36 |
| | 15° a* | −1.87 | −1.71 | −8.64 | −3.09 | −0.49 | −1.82 | −8.11 | −8.73 | −6.82 | −8.66 | −9.77 |
| | 15° b* | 4.96 | 4.81 | −15.05 | −1.82 | 3.51 | 5.80 | −10.99 | −11.27 | −11.85 | −14.56 | −16.18 |
| | 25° L* | 105.01 | 102.45 | 88.20 | 37.26 | 51.30 | 105.66 | 95.01 | 91.36 | 93.22 | 91.37 | 90.58 |
| | 25° a* | −2.03 | −2.04 | −6.79 | −3.19 | −0.60 | −2.00 | −6.99 | −7.36 | −5.95 | −7.45 | −7.99 |
| | 25° b* | 4.61 | 4.61 | −11.60 | −1.10 | 3.19 | 4.86 | −8.95 | −9.25 | −9.86 | −12.09 | −12.87 |
| | 45° L* | 63.90 | 60.62 | 44.50 | 16.53 | 27.82 | 61.85 | 25.49 | 50.66 | 52.89 | 51.45 | 50.08 |
| | 45° a* | −1.49 | −1.46 | −3.05 | −1.48 | −0.21 | −1.37 | −4.02 | −4.21 | −3.35 | −4.25 | −4.20 |
| | 45° b* | 2.98 | 2.54 | −8.02 | −2.34 | 1.61 | 2.71 | −6.82 | −7.26 | −7.54 | −8.96 | −9.38 |
| | 75° L* | 39.96 | 37.64 | 22.97 | 6.22 | 12.44 | 37.50 | 28.29 | 27.52 | 28.47 | 27.60 | 26.16 |
| | 75° a* | −1.81 | −1.89 | −2.08 | −0.50 | 0.10 | −1.71 | −3.14 | −3.56 | −2.59 | −3.10 | −2.84 |
| | 75° b* | 3.01 | 2.31 | −8.27 | −2.41 | 0.47 | 2.84 | −7.05 | −7.66 | −7.86 | −8.77 | −9.01 |
| | 110° L* | 32.92 | 30.82 | 16.35 | 3.57 | 6.50 | 30.95 | 20.41 | 20.03 | 20.22 | 19.75 | 18.68 |
| | 110° a* | −2.35 | −2.38 | −2.14 | −0.02 | 0.12 | −2.20 | −3.40 | −3.84 | −2.68 | −3.06 | −2.83 |
| | 110° b* | 3.85 | 3.31 | −8.77 | −1.89 | 0.47 | 4.12 | −7.55 | −8.15 | −8.27 | −9.19 | −9.36 |
| | 15° C VALUE | 5.30 | 5.10 | 17.35 | 3.59 | 3.54 | 6.08 | 13.66 | 14.26 | 13.67 | 16.94 | 18.90 |
| | 25° C VALUE | 5.04 | 5.04 | 13.44 | 3.37 | 3.25 | 5.26 | 11.36 | 11.82 | 11.52 | 14.20 | 15.15 |
| | 45° C VALUE | 3.33 | 2.93 | 8.58 | 2.77 | 1.62 | 3.04 | 7.92 | 8.39 | 8.25 | 9.92 | 10.28 |
| | 75° C VALUE | 3.51 | 2.98 | 8.53 | 2.46 | 0.48 | 3.32 | 7.72 | 8.45 | 8.28 | 9.30 | 9.45 |
| | 110° C VALUE | 4.51 | 4.08 | 9.03 | 1.89 | 0.49 | 4.67 | 8.28 | 9.01 | 8.69 | 9.69 | 9.78 |
| | 15° −100° C VALUE | 0.79 | 1.03 | 8.33 | 1.70 | 3.06 | 1.41 | 5.38 | 5.25 | 4.98 | 7.25 | 9.12 |
| | 15° HUE ANGLE | 110.66 | 109.57 | 240.14 | 210.50 | 97.95 | 107.42 | 233.57 | 232.24 | 240.08 | 239.26 | 238.88 |
| | 25° HUE ANGLE | 113.77 | 113.87 | 239.66 | 199.03 | 100.65 | 112.37 | 232.01 | 231.49 | 238.89 | 238.36 | 238.17 |
| | 45° HUE ANGLE | 116.57 | 119.89 | 249.18 | 237.69 | 97.43 | 116.82 | 239.48 | 239.89 | 246.04 | 244.62 | 245.88 |
| | 75° HUE ANGLE | 84.78 | 85.71 | 116.83 | 124.02 | 85.86 | 84.76 | 109.06 | 110.93 | 111.24 | 113.94 | 115.75 |
| | 110° HUE ANGLE | 121.40 | 125.72 | 256.29 | 269.39 | 75.68 | 118.10 | 245.76 | 244.77 | 252.04 | 251.58 | 253.18 |
| | 15° −100° HUE ANGLE | −10.74 | −16.15 | −16.15 | −58.90 | 22.27 | −10.68 | −12.18 | −12.53 | −11.97 | −12.33 | −14.30 |
| | 15° −100° L* VALUE | 95.84 | 97.34 | 101.95 | 47.3 | 60.42 | 102.73 | 99.99 | 96.57 | 96.92 | 96.1 | 98.68 |
| | | | | | | | | | | | | |

# FIG.8

QSAR ANALYSIS

| | $r^2$ (CONTRIBUTION RATIO) | $r$ (CORRELATION COEFFICIENT) | CORRELATION FORMULA |
|---|---|---|---|
| 1 | 0.774 | 0.885 | $3.35962+0.000474*X1^2+0.11361*\langle2.25-X1\rangle^2+0.057642*\langle"X2"-97\rangle-0.064096*\langle"X2"-90\rangle-0.006376*\langle103.37-X3\rangle+0.000767*\langle52.36-X4\rangle^2$ |
| 2 | 0.774 | 0.885 | $3.36022+0.000476*X1^2+0.000727*\langle53.49-X4\rangle^2+0.113511*\langle2.25-X1\rangle^2+0.057554*\langle"X2"-97\rangle-0.064014*\langle"X2"-90\rangle-0.006606*\langle103.37-X3\rangle$ |
| 3 | 0.774 | 0.885 | $3.2996+0.013184*X1-0.007534*\langle95.09-X3\rangle+0.000785*\langle52.36-X4\rangle^2+0.130979*\langle2.25-X1\rangle^2-0.065116*\langle"X2"-90\rangle+0.058619*\langle"X2"-97\rangle$ |
| 4 | 0.773 | 0.885 | $3.34463-0.00732*\langle95.09-X3\rangle+0.0008*\langle52.36-X4\rangle^2+0.08307*\langle2.54-X1\rangle^2+0.000443*X1^2+0.077622*\langle"X2"-95\rangle-0.08417*\langle"X2"-90\rangle$ |
| 5 | 0.773 | 0.885 | $3.30917+0.08094*\langle"X2"-95\rangle+0.012971*X1-0.007545*\langle95.09-X3\rangle+0.000773*\langle52.36-X4\rangle^2+0.128525*\langle2.25-X1\rangle^2-0.087593*\langle"X2"-90\rangle$ |
| 6 | 0.770 | 0.883 | $3.34619-0.007719*\langle95.09-X3\rangle+0.041874*\langle"X2"-97\rangle-0.048411*\langle"X2"-88\rangle+0.000448*X1^2+0.08304*\langle2.54-X1\rangle^2+0.000771*\langle53.49-X4\rangle^2$ |
| 7 | 0.770 | 0.883 | $3.38101+0.000461*X1^2-0.053049*\langle"X2"-88\rangle-0.008198*\langle95.47-X3\rangle+0.000655*\langle59.63-X3\rangle^2+0.139831*\langle2.05-X1\rangle^2+0.04662*\langle"X2"-97\rangle$ |
| 8 | 0.770 | 0.883 | $3.35299+0.000801*\langle52.36-X4\rangle^2-0.007387*\langle95.09-X3\rangle+0.042493*\langle"X2"-97\rangle-0.049023*\langle"X2"-88\rangle+0.000439*X1^2+0.111768*\langle2.25-X1\rangle^2$ |
| 9 | 0.770 | 0.883 | $3.35271+0.000705*\langle55.45-X4\rangle^2-0.008205*\langle95.09-X3\rangle+0.042084*\langle"X2"-97\rangle-0.048633*\langle"X2"-88\rangle+0.000441*X1^2+0.111394*\langle2.25-X1\rangle^2$ |
| 10 | 0.774 | 0.885 | $3.34303+0.000757*\langle53.49-X4\rangle^2+0.117817*\langle2.25-X1\rangle^2+0.058131*\langle"X2"-97\rangle-0.064606*\langle"X2"-90\rangle-0.007873*\langle95.09-X3\rangle+0.013639*\langle"X1"-3.99\rangle$ |

| | |
|---|---|
| 45° CHROMA SATURATION | X1 |
| GLITTER REPRESENTING VALUE | X2 |
| 15° L* | X3 |
| BRIGHTNESS FF | X4 |
| HUE ANGLE FF | X5 |
| CHROMA SATURATION FF | X6 |
| 45° HUE ANGLE | X7 |
| VISUAL MOTTLING VALUE | y |

EP 1 621 259 A1

# FIG.9

CORRELATION OF VISUAL MOTTLING—CALCULATED UNEVENNESS

EP 1 621 259 A1

# FIG.10

EP 1 621 259 A1

## INTERNATIONAL SEARCH REPORT

| | International application No. |
|---|---|
| | PCT/JP2004/005809 |

**A. CLASSIFICATION OF SUBJECT MATTER**
Int.Cl$^7$  B05D3/00, B05C11/00, G01J3/46

According to International Patent Classification (IPC) or to both national classification and IPC

**B. FIELDS SEARCHED**

Minimum documentation searched (classification system followed by classification symbols)

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 11-351964 A  (Nippon Paint Co., Ltd.), 24 December, 1999 (24.12.99), Claims; examples (Family: none) | 1-9 |
| Y | JP 2002-226735 A  (Nippon Paint Co., Ltd.), 14 August, 2002 (14.08.02), Claims & US 2002/0149770 A1 | 1-9 |
| A | WO 02/013080 A1  (Kansai Paint Co., Ltd.), 14 February, 2002 (14.02.02), Claims & US 2002/0152132 A1 | 1-9 |

| ☒ | Further documents are listed in the continuation of Box C. | ☐ | See patent family annex. |
|---|---|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 July, 2004 (27.07.04) | 31 August, 2004 (31.08.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2004/005809 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-246671 A (Nippon Paint Co., Ltd.), 14 September, 1998 (14.09.98), Claims; examples (Family: none) | 1-9 |

Form PCT/ISA/210 (continuation of second sheet) (January 2004)